# FASCICULE DE BREVET EUROPEEN

(11) **EP 1 457 461 B1**
(45) Date de publication et mention de la délivrance du brevet: **14.09.2005**
(21) Numéro de dépôt: 01275062.6
(22) Date de dépôt: 20.12.2001
(51) Int. Cl.: C02F 1/52, C02F 1/42

(54) **PROCEDE DE DESIONISATION ET DE CLARIFICATION DU MILIEU AQUEUX UTILISE DANS UNE MACHINE A ELECTROEROSION ET PRODUIT UTILISE DANS CE PROCEDE**
VERFAHREN ZUM ENTIONISIEREN UND KLÄREN DES IN EINER FUNKENEROSIONSMASCHINE VERWENDETEN WÄSSRIGEN MEDIUMS UND BEI DEM VERFAHREN VERWENDETES PRODUKT
METHOD OF DEIONISING AND CLARIFYING THE AQUEOUS MEDIUM USED IN AN ELECTRICAL DISCHARGE MACHINE AND THE PRODUCT USED IN SAID METHOD

(43) Date de publication de la demande: 15.09.2004
(73) Titulaire: Ona Electro-Erosion, S.A., 48200 Durango (Vizcaya) (ES)
(72) Inventeur: FERRET POZA, Raquel, 01002 Vitoria (Alava) (ES); ARANZABE GARCIA, Ana, 48940 Leioa (Bizkaia) (ES); CASTRILLO GOMEZ, Koldobika, E-48007 Bilbao (Bizkaia) (ES); MARTINEZ MUGICA, Fernando, 20809 Aia (Gipuzkoa) (ES)
(74) Mandataire: Urizar Barandiaran, Miguel Angel
(86) Numéro de dépôt international: PCT/ES2001/000496
(87) Numéro de publication internationale: WO 2003/053861

(56) Documents cités:
- ES-A- 2 151 400
- ES-T- 2 154 020
- DATABASE WPI Week 199637, Derwent Publications Ltd., London, GB; AN 1996-369971, XP002967485 & SU 1 760 698 A (STEKOPLASTIK RES PRODN ASSOC) 20 December 1995
- DATABASE WPI Week 198344, Derwent Publications Ltd., London, GB; AN 1983-802169, XP002967486 & DE 32 15 346 A (MOTOR TURBIN UNION MUNCH) 27 October 1983

## Description

Le processus d'électroérosion à fil implique l'utilisation d'un fil en laiton, acier, cuivre, etc. la pièce à travailler qui est en général conductrice, par exemple, en acier, aluminium, cuivre, titane, etc. et un milieu aqueux de travail à faible conductivité et sans particules en suspension par exemple un milieu diélectrique formé d'eau filtrée, réfrigérée et partiellement désionisée. D'un point de vue chimique, il peut se produire de multiples réactions entre les différentes substances ou composés pendant un processus d'électroérosion à fil en milieu aqueux.

D'une façon générale, comme conséquence du processus d'électroérosion, il se produit une augmentation progressive de la conductivité du milieu. Ladite augmentation est due à des réactions d'oxydoréductions et des réactions acide-base qui ont lieu essentiellement entre le métal dont est composée la pièce à travailler et le milieu diélectrique qui les entoure, en général l'eau. La décharge électrique génère un courant d'électrons qui provoque la formation d'ions provenant de l'eau, de la pièce et du fil mais surtout de la pièce à travailler. Cette augmentation de la conductivité est contrôlée par un système de résines mixte (cationiques et anioniques) qui échange les ions avec le milieu. Le prix des résines cationiques-anioniques est assez élevé et leur récupération de manière écologique est relativement compliquée, d'où le fait que la désionisation par résines est un processus onéreux.

D'autre part, il est évident que le processus d'électroérosion implique l'oxydation du fer métallique (Fe⁰) comme conséquence d'une réaction redox avec l'eau pendant la décharge. Le fer passe de Fe⁰ à Fe²⁺ et à Fe³⁺, cette dernière espèce en contact avec l'eau atteint l'équilibre acide-base précipitant sous forme d'hydroxyde le pH supérieur à 2. L'hydroxyde Fe(OH)₃ est un précipité foncé gélatineux, à comportement colloïdal qui ne se dépose pas au fond mais qui a tendance à rester en suspension, ce qui se traduit par un obscurcissement de l'eau du réservoir de nettoyage du système de filtrage qui ne peut pas le retenir.

Le processus d'électroérosion entraîne une basification continue du milieu (en principe de l'eau partiellement désionisée neutre). Cette augmentation du pH est due au processus redox de l'eau pendant l'échange d'électrons. Pour compenser l'oxydation du fer, l'eau se réduit (réduction d'oxygène et d'hydrogène), ce qui en milieu neutre ou alcalin suppose une augmentation de la concentration de OH⁻ dans le milieu. Une partie de ce dernier réagit pour former les hydroxydes des métaux correspondants mais il reste un excès qui maintient le milieu basique.

De plus, le fil d'électroérosion doit passer pour son guidage par des orifices très précis, de quelques microns (µm). Ces orifices sont obturés par le dépôt de composés complexes des métaux érodés pendant le processus et les éléments qui composent les guides du fil se détériorent ainsi que la précision de l'électroérosion sur la pièce à travailler.

Le demandeur considère que l'essence de tous ces problèmes réside dans le fait que la dissolution des métaux Fe, Cu, Al des pièces à travailler est très rapide en milieux à faible conductivité (inférieure à 40µS/cm), le meilleur exemple étant le passage de Fe⁰ à Fe⁺⁺ et à Fe⁺⁺⁺, d'où le fait que la solution est de trouver un milieu qui élimine la première oxydation du métal, par exemple, Fe⁺⁺ et agit rapidement pour éviter si la deuxième oxydation Fe⁺⁺ → Fe⁺⁺⁺ se produit qu'elle provoque l'hydroxyde.

Ce milieu-solution contrôlera simultanément la concentration d'ions dans le milieu et donc la conductivité permettant une augmentation plus posée de cette dernière et une moindre consommation de résines. Tout ceci est sûrement possible avec un milieu qui n'affecte pas le processus d'électroérosion en soi (capacité d'arrachage, énergie de l'étincelle, etc.) et qui outre le fait de palier la combustion des résines, facilite la filtration, l'extraction et la déshydratation des boues, en raison de l'absence de particules à comportement colloïdal comme c'est le cas de l'hydroxyde Fe (OH)3.

Le demandeur considère que ce milieu-solution est un mélange d'action synergique basée sur l'union d'un acide organique, utilisé pour sa capacité complexante (acide oxalique) et un acide inorganique utilisé pour sa qualité précipitante (acide phosphorique) qui agit sur les principaux cations présents dans le système. Avec ce mélange, on agit sur la précipitation de l'hydroxyde métallique, la conductivité du milieu et sur le pH du système.

L'acide oxalique présente de plus une forte tendance à former des complexes stables, spécialement avec le fer. De cette façon, l'ajout d'oxalique agit sur le Fe⁺⁺ précipitant une partie de ce dernier, pouvant également faire une précipitation en réaction avec le zinc et le cuivre (Cu⁺⁺) qui sont dissous dans le milieu diélectrique. Cette action réduit la conductivité du milieu diélectrique ainsi que la concentration du fer trivalent formé.

Étant donné que la présence de Fe⁺⁺⁺ est inévitable, le mélange est complété avec de l'acide phosphorique capable de faire une précipitation rapidement sous forme de FePO₄ évitant la formation de particules colloïdes très difficiles à filtrer et à séparer. Le Fe⁺⁺⁺ forme de plus des complexes stables avec l'ion oxalate et le phosphate acide.

Outre le fait d'agir sur la formation de fer trivalent, le mélange influe sur la conductivité qui est provoquée par la vitesse à laquelle se déplacent les particules chargées dans le milieu diélectrique. Ces particules chargées sont des anions et des cations de petite taille (H^{+,} OH⁻, Fe³⁺, Fe²⁺, Cu⁺, etc.) qui peuvent être solvatés par le milieu.

Pour réduire ou éviter l'augmentation de la conductivité, la solution chimique implique d'une part la génération d'interactions entre les particules chargées (ce qui réduit la conductivité) et la réduction de la mobilité des ions, en créant par exemple des particules qui tendent à entraîner la solution qui les entoure. De cette façon, les ions proches doivent se déplacer à contre-courant et non plus dans un milieu stationnaire, perdant la facilité de mouvement par rapport à la situation quand ils se déplacent séparément et à faible concentration. Ainsi, il est préférable de choisir les grandes particules chargées de nature polaire comme l'acide oxalique entraînant un plus grand nuage de solvation.

Bien que le mélange d'acide présente une valeur de pH très acide, la basification constante qui provoque le processus d'électroérosion compense l'acidité en maintenant le milieu près de la neutralité.

Comme conséquence de l'activité chimique du mélange oxalique/phosphorique, une grande partie des ions chargés se précipitent comme sels, ce qui suppose leur élimination du milieu par l'action du filtre. Les espèces chargées restantes sont transformées en complexes stables, des molécules beaucoup plus grandes qui réduisent leur mobilité et donc réduisent leur apport à la conductivité du milieu.

D'une façon collatérale, le mélange d'oxalique-phosphorique dissout les dépôts et les croûtes formés dans les orifices de conduite du fil d'électroérosion, d'où le fait que la précision du guidage du fil augmente.

Pour mieux comprendre l'objet de la présente invention, une forme choisie de réalisation pratique a été représentée sur les plans, susceptible de changements accessoires qui ne modifieront pas son fondement.

La figure 1 est une représentation en coordonnées d'un processus de désionisation habituel connu avec des résines cationiques-anioniques.

La figure 2 est la représentation de la figure 1 selon une réalisation pratique du processus objet de l'invention.

La figure 3 est une représentation en coordonnées de la sédimentation des solutés de l'eau provenant de l'électroérosion dans un processus habituel connu.

La figure 4 est une représentation en coordonnées comme celles de la figure 3 de la sédimentation des solutés de l'eau provenant de l'électroérosion selon le processus et le produit objet de l'invention.

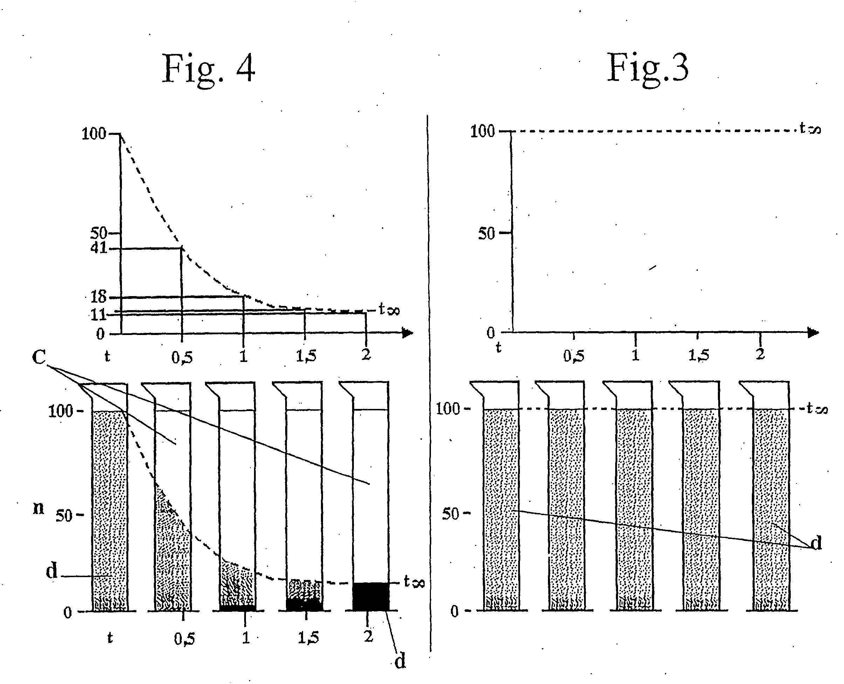

Les figures 3 et 4 correspondent à des essais de sédimentation réalisés dans deux éprouvettes de 100 mm de hauteur et de 100 millilitres de contenance qui ont été remplies avec de l'eau provenant de l'électroérosion dont la conductivité est de 10µS/cm et qui contiennent 10 mm³ d'acier en suspension chacune (l'aspect de l'eau à l'intérieur des deux récipients est entièrement noir).

Le liquide de la figure 4 a été traité avec la dissolution objet de l'invention et son contenu dans le mélange est inférieur à 0.07 millilitres.

La figure 3 montre un liquide qui reste noir et qui ne sédimente pas avec le temps.

La figure 4 montre la vitesse de sédimentation du contenu qui au bout de 2 heures a totalement sédimenté et l'eau présente un aspect propre et peut être recyclée pour son utilisation.

Pour la dépuration du milieu aqueux utilisé dans une machine d'électroérosion, on dispose généralement d'un circuit de dépuration : en partant du réservoir de travail où est travaillée la pièce (normalement métallique) correspondante et qui contient le milieu aqueux (en principe de l'eau à faible conductivité) on transporte le milieu aqueux déjà contaminé à un réservoir de réception pour l'envoyer au filtre et à l'échangeur d'ions au moyen de résines cationiques-anioniques pour que l'eau atteigne le degré de désionisation requis pour le processus, d'où le fait que cette eau peut revenir directement ou indirectement au réservoir de travail et commencer le cycle.

Ce processus et ce produit sont utilisés avec des eaux de conductivité inférieure à 40µS/cm et de préférence avec des eaux ayant une conductivité inférieure à 20µS/cm.

Un exemple de réalisation pratique non limitatif de la présente invention est décrit ci-après.

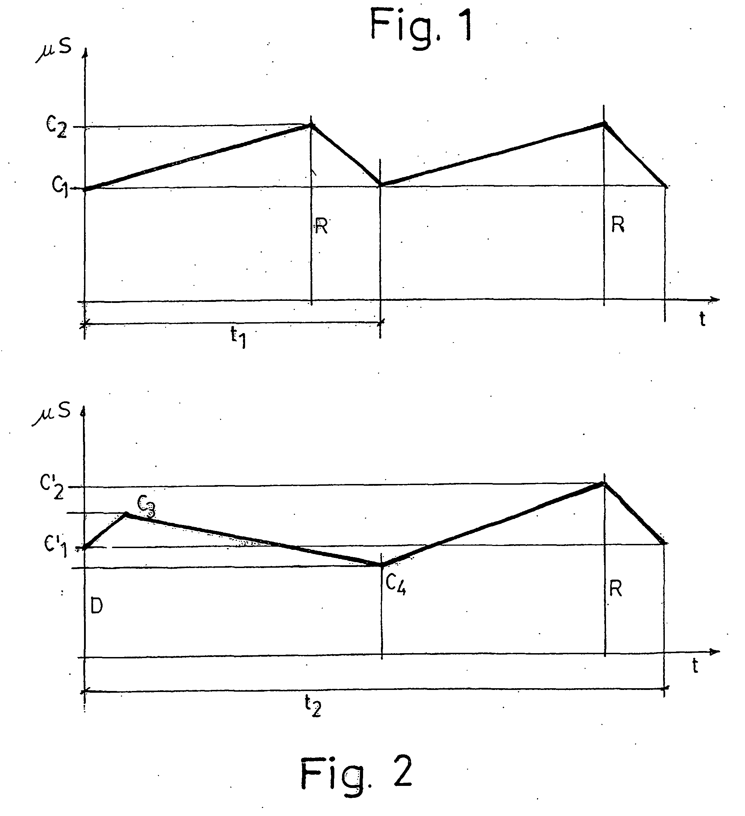

Le milieu aqueux où l'on travaille en électroérosion est généralement de faible conductivité. Comme des ions se produisent dans le processus, on utilise des résines cationiques-anioniques pour éliminer les ions ou comme il se passe en réalité, pour maintenir le milieu aqueux avec la conductivité requise (selon chaque usage), dans la figure 1, par exemple, la conductivité reste inférieure à 14µS/cm.

Le milieu aqueux commence avec une conductivité initiale (C₁), par exemple 11µS/cm et se charge d'ions pour atteindre une conductivité limite (C₂), par exemple 14µS/cm qui est la quantité prédéterminée pour que les résines cationiques-anioniques qui abaissent la conductivité de 14µS/cm à 11µS/cm (R) se mettent à travailler et que le processus recommence. Des conditions normales de travail, en régime d'usure, peuvent être le travail d'une pièce en acier, aluminium, cuivre ou titane avec un détachement de matériau de 1500 et 3000 mm³/heure.

Le temps (t₁) du cycle du processus que met le milieu aqueux à passer de la conductivité initiale (C₁) de 11µS/cm à une conductivité limite (C₂) à 14µS/cm et revenir à la conductivité initiale (C₁) peut être de 15 minutes.

Les essais effectués (fig. 2) avec des mélanges d'acide oxalique et phosphorique indiquent que de larges variations dans les proportions des deux composants du mélange offrent des résultats qui améliorent les résultats jusqu'à présent connus, mais le demandeur considère que des résultats très favorables sont obtenus avec des mélanges où l'acide oxalique se trouve entre 0,018 et 0,035 moles et l'acide phosphorique entre 1,28 et 2,5 moles par litre de dissolution dans l'eau distillée ou désionisée, inférieure par exemple à 10µS/cm.

### EXEMPLE:

On prépare une dissolution (D) d'un mélange de 3,15 g d'acide oxalique C₂O₄H₂, c'est à dire 0'025 mol, 0'1 l. d'acide phosphorique PO₄H₃, c'est à dire, 1'8 mol et le reste jusqu'à 1 l. d'eau désionisée dont la conductivité était de 7µS/cm.

On a utilisé une pièce à travailler en acier en utilisant un régime de travail avec détachement de matière de 2160 mm³/heure (identique à celui de la fig.1 pour pouvoir faire une comparaison adéquate).

On est parti d'une conductivité (C₁') initiale du milieu aqueux de 11µS/cm et on a établi comme conductivité (C₂') pour l'entrée en phase des résines (R) cationiques-anioniques de 14µS/cm.

On a ajouté 7 ml de la dissolution préparée (D) au milieu aqueux. La conductivité a augmenté jusqu'à un maximum (C₃) de 12µS/cm puis elle a commencé à diminuer peu à peu jusqu'à un minimum (C₄) de 10µS/cm pour commencer à augmenter et atteindre la conductivité limite (C₂'), les résines (R) entrant ainsi en action, pour revenir au milieu aqueux de la conductivité limite (C₂') à la conductivité initiale (C₁') et recommencer le processus. Le temps (t₂) du cycle est de 30 minutes c'est à dire environ le double du temps nécessaire au fonctionnement habituel connu décrit antérieurement.

On peut observer clairement que dans des conditions identiques le processus habituel connu (fig.1) fait travailler les résines (R) deux fois toutes les 30 minutes alors que dans le processus de l'invention (fig.2), les résines (R) ne travaillent qu'une fois toutes les 30 minutes, ce qui suppose une augmentation de 100% de la vie des résines (R).

L'essai avec des pièces d'aluminium a donné des résultats similaires.

Les essais avec des pièces en cuivre ont obligé à modifier substantiellement la quantité de dissolution à utiliser, 1, 5 ml étant suffisant pour une quantité de Cu détaché égal environ à la moitié du cas de l'acier utilisant un régime d'usure similaire à celui utilisé pour l'acier.

Il faut tenir compte du fait que les fabricants de machines d'électroérosion fournissent des tableaux technologiques où sont indiquées les vitesses de détachement d'où l'on peut déduire les volumes de matériau détaché par unité de temps dans chaque régime de travail.

La dissolution peut être ajoutée à tout moment du circuit de dépuration du milieu aqueux, mais elle sera ajoutée de préférence dans le réservoir de réception du milieu aqueux diélectrique déjà utilisé qui provient du réservoir de travail.

Dans les figures 3 et 4, les coordonnées sont la hauteur de sédimentation (h) en mm, temps (t) en heures et niveau (n) de l'interphase entre le liquide propre (c) et sale (d).

## Revendications

1. Processus de désionisation et clarification du milieu aqueux utilisé dans une machine d'électroérosion comprenant un circuit de dépuration de ce milieu aqueux où est incluse une phase d'échange d'ions entre des résines cationiques et anioniques avec le milieu diélectrique aqueux **caractérisé par le fait qu'**on ajoute au milieu aqueux qui a une conductivité inférieure à 40µS/cm, une dissolution en eau distillée/désionisée d'acide oxalique et d'acide phosphorique dans des proportions approximatives d'acide oxalique entre 0,18 et 0,035 moles et d'acide phosphorique entre 1,28 et 2,5 moles par litre de dissolution.

2. Processus de désionisation et clarification du milieu diélectrique aqueux utilisé dans une machine d'électroérosion selon la revendication précédente **caractérisé par le fait que** la dissolution est ajoutée au milieu aqueux après la phase d'échange des ions entre les résines cationiques et anioniques avec le milieu aqueux.

3. Processus de désionisation et clarification du milieu aqueux utilisé dans une machine d'électroérosion selon la deuxième revendication **caractérisé par le fait que** si la machine d'électroérosion travaille avec des pièces de Fe ou Al, on ajoute environ aux 100 ml du milieu aqueux 7 ml de dissolution.

4. Processus de désionisation et clarification du milieu diélectrique aqueux utilisé dans une machine d'électroérosion selon la première revendication, **caractérisé par le fait que** si la machine travaille avec des pièces Cu, on ajoute environ aux 100 ml du milieu aqueux 1,5 ml de dissolution.

5. Processus de désionisation et clarification du milieu diélectrique aqueux utilisé dans une machine d'électroérosion selon les revendications précédentes, **caractérisé par le fait que** la dissolution est ajoutée au circuit de dépuration dans le réservoir de réception du milieu aqueux déjà utilisé.

6. Processus de désionisation et clarification du milieu diélectrique aqueux utilisé dans une machine d'électroérosion selon la première revendication, **caractérisé par le fait que** la dissolution en eau désionisée est de 0,025 moles d'acide oxalique et de 1,8 moles d'acide phosphorique par litre de dissolution.

7. Produit utilisé dans le processus de désionisation et clarification du milieu diélectrique aqueux utilisé dans une machine d'électroérosion selon les revendications précédentes, **caractérisé par le fait que** cela consiste en une dissolution en eau distillée/désionisée d'acide oxalique et d'acide phosphorique dans des proportions approximatives d'acide oxalique entre 0,18 et 0,035 moles et d'acide phosphorique entre 1,28 et 2,5 moles par litre de dissolution.

## Patentansprüche

1. Vorgehensweise zur Entionisierung und Klärung des wässrigen Mediums, das bei einer Elektroerosionsmaschine verwendet wird und die aus einem Klärungskreislauf dieses wässrigen Mediums besteht, zu der eine Ionenaustauschphase zwischen kationischen und anionischen Harzen mit dem dielektrischen wässrigen Medium gehört, und die sich **dadurch kennzeichnet, dass** dem wässrigen Medium, dessen Leitfähigkeit unter 40µS/cm liegt, eine Lösung aus Oxalsäure und Phosphorsäure in destilliertem / entionisiertem Wasser mit einem ungefähren Verhältnis der Oxalsäure zwischen 0,18 und 0,035 mol und der Phosphorsäure zwischen 1,28 und 2,5 mol pro Liter Lösung zugesetzt wird.

2. Vorgehensweise zur Entionisierung und Klärung des wässrigen dielektrischen Mediums, das bei einer Elektroerosionsmaschine verwendet wird, wie im obigen Anspruch, die sich **dadurch kennzeichnet, dass** die Lösung dem wässrigen Medium nach der Ionenaustauschphase zwischen den kationischen und anionischen Harzen mit dem wässrigen Medium zugegeben wird.

3. Vorgehensweise zur Entionisierung und Klärung des wässrigen Mediums, das bei einer Elektroerosionsmaschine verwendet wird, wie im zweiten Anspruch, die sich **dadurch kennzeichnet, dass**, wenn die Elektroerosionsmaschine mit Fe oder Al Teilen arbeitet, auf ca. 100 ml des wässrigen Mediums 7 ml Lösung gegeben werden.

4. Vorgehensweise zur Entionisierung und Klärung des wässrigen dielektrischen Mediums, das bei einer Elektroerosionsmaschine verwendet wird, wie im ersten Anspruch, die sich **dadurch kennzeichnet, dass**, wenn die Elektroerosionsmaschine mit Cu Teilen arbeitet, auf ca. 100 ml des wässrigen Mediums 1,5 ml Lösung gegeben werden.

5. Vorgehensweise zur Entionisierung und Klärung des wässrigen dielektrischen Mediums, das bei einer Elektroerosionsmaschine verwendet wird, wie in den obigen Ansprüchen, die sich **dadurch kennzeichnet, dass** die Lösung dem Reinigungskreislauf in den Eingangsbehälter des gebrauchten wässrigen Mediums zugegeben wird.

6. Vorgehensweise zur Entionisierung und Klärung des wässrigen Mediums, das bei einer Elektroerosionsmaschine verwendet wird, wie im ersten Anspruch, die sich **dadurch kennzeichnet, dass** die Lösung in entionisiertem Wasser aus 0,025 mol Oxalsäure und 1,8 mol Phosphorsäure pro Liter Lösung besteht.

7. Produkt, das bei der Vorgehensweise zur Entionisierung und Klärung des wässrigen dielektrischen Mediums, das bei einer Elektroerosionsmaschine verwendet wird, wie in den obigen Ansprüchen verwendet wird und sich **dadurch kennzeichnet, dass** es aus einer Lösung aus Oxalsäure und Phosphorsäure in destilliertem / entionisiertem Wasser mit einem ungefähren Verhältnis der Oxalsäure zwischen 0,18 und 0,035 mol und der Phosphorsäure zwischen 1,28 und 2,5 mol pro Liter Lösung besteht.

## Claims

1. Deionisation and clarification process of the aqueous medium used in an electroerosion machine, of the kind that are comprised of a circuit that purifies this aqueous medium, which includes an ion exchange phase between cationic and anionic resins with the aqueous dielectric medium, **characterised** because a solution of oxalic acid and phosphoric acid in distilled/deionised water is added to the aqueous medium, with conductivity under 40µS/cm, in the approximate proportion of oxalic acid between 0.18 and 0.035 moles and phosphoric acid between 1.28 and 2.5 moles per litres of solution.

2. Deionisation and clarification process of the aqueous dielectric medium used in an electroerosion machine, according to previous claim, **characterised** because the solution is added to the aqueous medium following the ion exchange phase between the cationic and anionic resins with the aqueous medium.

3. Deionisation and clarification process of the aqueous medium used in an electroerosion machine, according to second claim, **characterised** because if the electroerosion machine works with Fe or Al parts, 7 ml of solution is added approximately to 100 ml of aqueous medium.

4. Deionisation and clarification process of the aqueous medium used in an electroerosion machine, according to the first claim, **characterised** because if the electroerosion machine works with Cu parts, 1.5 ml of solution are added approximately to 100 ml of aqueous medium.

5. Deionisation and clarification process of the aqueous medium used in an electroerosion machine, according to previous claims, **characterised** because the solution is added to the purifying circuit, in the receiving tank of the aqueous medium already used.

6. Deionisation and clarification process of the aqueous medium used in an electroerosion machine according to the first claim, **characterised** because the solution in deionised water is 0.025 moles oxalic acid and 1.8 moles phosphoric acid per litre of solution.

7. Product used in the deionisation and clarification process of the aqueous dielectric medium used in an electroerosion machine, according to previous claims, **characterised** because it is comprised of a solution of oxalic acid and phosphoric acid in distilled/deionised water in the approximate proportion of oxalic acid between 0.18 and 0.035 moles and phosphoric acid between 1.28 and 2.5 moles per litre of solution.
